(19) **Europäisches Patentamt**

**European Patent Office**

**Office européen des brevets**

(11) **EP 1 496 505 A2**

(12) **EUROPEAN PATENT APPLICATION**

(43) Date of publication:
**12.01.2005 Bulletin 2005/02**

(51) Int Cl.⁷: **G11B 7/135**

(21) Application number: **04254158.1**

(22) Date of filing: **12.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **10.07.2003 KR 2003046866**

(71) Applicant: **Samsung Electronics Co., Ltd.**
**Suwon-si, Gyeonggi-do (KR)**

(72) Inventors:
• **Kim, Tae-Kyung**
**Seoul (KR)**
• **Ahn, Young-Man, 212-1002 Summitvill**
**Suwon-si Gyeonggi-do (KR)**
• **Chung, Chong-Sam, 406-301 Shinyoungtong**
**Hwaseong-gun Gyeonggi-do (KR)**

(74) Representative: **Robinson, Ian Michael et al**
**Appleyard Lees,**
**15 Clare Road**
**Halifax HX1 2HY (GB)**

(54) **Optical pickup and optical recording and/or reproducing apparatus**

(57)    An optical pickup to reduce a focus offset by alleviating the effect of at least a part of a region of a beam whose intensity is high due to residual aberration on a signal detected by a photodetector (40) even when the aberration remains in a beam received by the photodetector (40) due to a phase difference introduced by a correcting element (20) to compensate for spherical aberration.

FIG. 1

EP 1 496 505 A2

**Description**

The present invention relates to an optical recording and/or reproducing apparatus, and, more particularly, to an optical pickup designed to reduce a focus offset during recording and/or reproducing of a multi-layer recording medium having a plurality of recording layers on one side thereof and an optical recording and/or reproducing apparatus employing the same.

In an optical recording and/or reproducing apparatus to record and/or reproduce information to and/or from an optical disc (e.g., an optical information storage medium using a beam spot to which an objective lens focuses a laser beam), the recording capacity is determined by the size of the focused beam spot. Equation (1) defines a beam spot size S that is determined by a wavelength $\lambda$ of a laser beam used and a Numerical Aperture (NA) of the objective lens:

$$S \propto \lambda / NA \qquad (1)$$

Therefore, to reduce the beam spot size S for increasing the disc's recording density, it is necessary to use a shorter wavelength light source such as a blue laser and an objective lens with an NA higher than 0.6.

Since the emergence of a CD technology designed to record and/or reproduce information using light of 780 nm wavelength, in which an objective lens with an NA of 0.45 or 0.5 is used, much research has been conducted to increase data storage capacity by increasing the areal recording density. By increasing the areal recording density a DVD technology designed to record and/or reproduce information using light of 650 nm wavelength and objective lens with an NA of 0.6 or 0.65 has resulted.

Ongoing studies are now underway to develop high density optical discs that can offer over 20 GB recording capacity using blue-violet light of a predetermined wavelength, e.g., 405 nm. Standards on high density optical discs are actively under development, some of which are almost finalized. The standards specify use of blue-violet light of 405 nm wavelength and an objective lens with an NA of 0.65 or 0.85 that will be described below.

The standards also set a thickness of a DVD disc to 0.6 mm, which is 50% less than 1.2 mm of a CD disc. Setting such a thickness is aimed at providing a tolerance due to a tilt of the optical disc since an NA of a DVD disc's objective lens increases to 0.6 that is higher than 0.45 of a CD disc's objective lens.

Where a tilt angle of an optical disc is $\theta$, the refractive index is n, its thickness is d, and the NA of an objective lens is NA, coma aberration $W_{31}$ caused by a tilt of the optical disc can be defined by Equation (2):

$$W_{31} = -\frac{d}{2} \frac{n^2(n^2-1)\sin\theta\cos\theta}{(n^2 - \sin^2\theta)^{5/2}} NA^3 \qquad (2)$$

Here, the refractive index and thickness of the optical disc refers to those of an optical medium from an incident surface to a recording surface, such as a cover layer or a substrate.

As is evident by Equation (2), to provide a tolerance due to the tilt of the optical disc, its thickness d must be reduced if the NA of the objective lens is increased for high density recording. For example, the thickness of a DVD is reduced to 0.6 mm, which is half the thickness of a CD.

Furthermore, for example, if the NA of the objective lens is increased to 0.85 for a high density optical disc with storage capacity higher than that of a DVD, the thickness of the high density optical disc must be reduced to approximately 0.1 mm. A blu-ray disc (BD) is a recording technology that increases the NA of an objective lens while reducing the thickness of the optical disc in this way. A BD standard specifies a 405 nm wavelength light source, a 0.85 NA objective lens, and an optical disc approximately 0.1 mm thick.

To further increase the storage capacity of the high density optical disc, it is necessary to use multiple recording layers like in a DVD. A multi-layer optical disc having two or more recording layers on a single side may significantly increase the storage capacity as compared to a single layer optical disc.

Here, optical discs can be classified into single-layer and multi-layer optical discs depending on the number of recording layers per side. Furthermore, the optical disc may be either single-sided (with recording layers on one side) or double-sided (with recording layers on both sides). A double-layer optical disc has dual recording layers per side. The double-layer optical disc also may be either single-sided or double-sided. While optical discs with multiple recording layers per side may significantly increase the recording capacity, these discs may suffer from spherical aberrations caused by a difference in distance between the recording layers.

For example, when an optical pickup records and/or reproduces a double-layer high density optical disc, an objective lens is optimized with respect to either recording layer or approximately the midpoint between the two recording layers. When the objective lens is optimized with respect to either recording layer, spherical aberration occurs during recording and/or reproducing of the other recording layer. Meanwhile, when the objective lens is optimized with respect to approximately the midpoint between the two recording layers, spherical aberration is generated during recording and/or reproducing of the two recording layers.

Previously, an article "A New Liquid Crystal Panel for Spherical Aberration Compensation", Santa Fe, New Mexico April 2001, Optical Data Storage Topical Meeting 2001, pp.103-105 has proposed a liquid crystal panel to compensate for spherical aberration produced when a cover layer thickness deviates from the standard in a high density optical disc system using a 0.1 mm thick cover layer and an objective lens with a NA of 0.85.

In the above-cited reference, the liquid crystal panel operates to correct spherical aberration produced during recording and/or reproducing of a recording layer for one linearly polarized incident beam such as a P-polarized beam that has been emitted by a light source and passed through a polarization beam splitter. The spherical aberration is corrected by generating an opposite phase difference.

Thus, use of the liquid crystal panel makes it possible to solve the problem of spherical aberration induced by a difference in distance between the recording layers during recording and/or reproducing of an optical disc with multiple recording layers per side.

In this case, since the liquid crystal panel is disposed between the polarization beam splitter and a quarter waveplate, a beam, reflected from the optical disc, becomes S-polarized after passing through the quarter waveplate. Then, the beam goes through the liquid crystal panel without any change.

Therefore, the phase difference generated to correct the original spherical aberration contained in the beam reflected from the optical disc toward the liquid crystal panel is not compensated by the liquid crystal panel. Thus, the beam received by a photodetector for detecting a reproduced information signal and/or error signal contains residual spherical aberration due to the phase difference introduced to correct the spherical aberration.

Since the residual spherical aberration causes a large focus offset, the focus offset results in degradation in the recording and/or reproducing characteristics during a layer jump on a multi-layer optical disc as well as a decrease in a margin for servo control. Another problem is that using an astigmatic method typically used in detecting a focus error signal for an optical disc using a land/groove format such as DVD-RAM is difficult due to generation of a large amount of focus crosstalk.

According to the present invention there is provided an apparatus and method as set forth in the appended claims. Preferred features of the invention will be apparent from the dependent claims, and the description which follows.

The present invention provides an improved optical pickup to reduce a focus offset even when aberration remains in a beam, which is received by a light receiving part, due to a phase difference introduced by a correcting element to compensate for the spherical aberration and an optical recording and/or reproducing apparatus employing the same.

According to an aspect of the present invention, an optical pickup, in which residual aberration is contained in a beam traveling toward a photodetector due to a phase difference created by a correcting element to compensate for spherical aberration caused by a thickness difference in a recording medium, is designed to reduce a focus offset by alleviating the effect of at least a part of a region of a beam whose intensity is high due to the residual aberration on a signal detected by the photodetector.

According to another aspect of the present invention, an optical pickup comprises a light source, an objective lens to focus a beam emitted by the light source to a spot on a recording medium, a photodetector to receive a beam reflected from the recording medium and to detect an information signal and/or an error signal, and a correcting element to create a phase difference in order to correct spherical aberration produced by a thickness difference in the recording medium for a beam emitted by the light source toward the recording medium. The photodetector comprises a plurality of light receiving areas and a gap between the light receiving areas such that at least a part of a high intensity portion of a beam is incident into the gap between the light receiving areas, to prevent detection of at least the part of the high intensity portion of the beam. The high intensity portion of the beam occurs due to residual aberration and is caused by the phase difference generated for correction of spherical aberration contained in a beam that is reflected from the recording medium toward the photodetector.

Where the radius of a light spot received on the photodetector is R, the gap between the light receiving areas is in the range of 0.2R to 0.6R of the light spot.

According to another aspect of the present invention, an optical pickup comprises a light source; an objective lens to focus a beam emitted by the light source to a spot on a recording medium; a photodetector to receive a beam reflected from the recording medium and to detect an information signal and/or an error signal; a correcting element to create a phase difference in order to correct spherical aberration produced by a thickness difference in the recording medium for a beam emitted by the light source toward the recording medium; and an optical element to reduce the effect of a high intensity portion of a beam on a signal detected by the photodetector, wherein the high intensity portion of the beam occurs due to aberration remaining in a beam reflected from the recording medium toward the photodetector due to the phase difference generated for correction of spherical aberration

The optical element may include a light-blocking element that prevents detection of at least the part of the high intensity portion of the beam. The light-blocking element may be disposed on a lens surface of the objective lens, on a light receiving surface of the photodetector, or between the objective lens and the photodetector. It may be a ring-shaped light-blocking region with a predetermined width or it may include one or more local light-blocking regions that prevent detection of only at least the part of the high intensity portion of the beam. Alternatively, the light-blocking element may be a ring-shaped gap with a predetermined width formed on a light receiving surface of the photodetector. The element may prevent detection of at least the part of the high intensity portion of the beam in the range of 0.2R to 0.6R of the light spot.

The optical element may include a light intensity distribution changing element that allows at least the part of the high intensity portion of the beam to be incident on the photodetector by changing the intensity distribution of the beam into a uniform distribution. The light intensity distribution changing element changes the intensity distribution of a beam into a uniform distribution and may include a ring-shaped holographic pattern region with a predetermined width that changes the intensity distribution of the beam or one or more local holographic pattern regions that change the intensity distribution of only at least the part of the high intensity portion of the beam. It may be disposed on a lens surface of the objective lens, on a light receiving surface of the photodetector, or between the objective lens and the photodetector. The light intensity distribution changing element preferably changes the intensity distribution of at least the part of the high intensity portion of the beam within the range of 0.2R to 0.6R of the light spot into a uniform distribution.

The optical element has a polarization characteristic so as to operate on only a beam that is reflected from the recording medium toward the photodetector or has non-polarization characteristic to operate independently of the polarization of an incident beam. Here, the optical pickup may further include a polarization-dependent light path changer that causes a beam emitted by a light source to go toward an objective lens and allows a beam reflected from the recording medium to travel toward the photodetector and a quarter waveplate that is disposed between the light path changer and the objective lens and changes the polarization of an incident beam. The correcting element may be a liquid crystal element that is disposed between the light path changer and the quarter waveplate and selectively creates a phase difference depending on the polarization of an incident beam and electric power driving. The correcting element preferably compensates for spherical aberration caused by a difference between a thickness for which the objective lens is designed and a thickness from a light incident surface to a recording layer being recorded and/or reproduced in a multi-layer recording medium having a plurality of recording layers on at least one side thereof. The multi-layer recording medium may be a blu-ray disc (BD) having a plurality of recording layers on at least one side thereof. In this case, the light source emits light of a wavelength suitable for a BD format, and the objective lens has a numerical aperture (NA) suitable for the BD format.

According to another aspect of the present invention, an optical recording and/or reproducing apparatus records information and/or reproduces information on and/or from a recording medium using an optical pickup that is installed movably along a radial direction of the recording medium and has an optical configuration in which residual aberration is contained in a beam traveling toward a photodetector due to a phase difference created by a correcting element to compensate for spherical aberration caused by a thickness difference in the recording medium. The optical pickup is designed to reduce a focus offset by alleviating the effect of at least a part of a portion of a beam whose intensity is high due to the residual aberration on a signal detected by the photodetector.

According to another aspect of the present invention, an optical recording and/or reproducing apparatus records information and/or reproduces information on and/or from a recording medium using an optical pickup that is installed movably along a radial direction of the recording medium, wherein the optical pickup includes an objective lens to focus a beam emitted by the light source to a spot on a recording medium, a photodetector to receive a beam reflected from the recording medium and to detect an information signal and/or an error signal, and a correcting element to create a phase difference in order to correct spherical aberration produced by a thickness difference in the recording medium for a beam emitted by the light source toward the recording medium. The photodetector includes a plurality of light receiving areas and is designed and/or arranged such that at least a part of a high intensity portion of a beam is incident into a gap between the light receiving areas, to prevent detection of at least the part of the high intensity portion of the beam, wherein the high intensity portion of the beam occurs due to residual aberration and is caused by the phase difference generated to correct the spherical aberration contained in a beam that is reflected from the recording medium toward the photodetector.

According to another aspect of the present invention, an optical recording and/or reproducing apparatus records information and/or reproduces information on and/or from a recording medium using an optical pickup that is installed movably along a radial direction of the recording medium, wherein the optical includes a light source, an objective lens to focus a beam emitted by the light source to a spot on a recording medium, a photodetector to receive a beam that is reflected from the recording medium and to detect an information signal and/or an error signal, a correcting element to create a phase difference in order to correct spherical aberration produced by a thickness difference in the recording medium for a beam emitted by the light source toward the recording medium, and an optical element to reduce the effect of a high intensity portion of a beam on a signal detected by the photodetector, wherein the high intensity portion of the beam occurs due to aberration remaining in a beam reflected from the recording medium toward the photodetector due to the phase difference generated for correction of spherical aberration.

Additional and/or other aspects and advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:

Figure 1 schematically illustrates the optical configuration of an optical pickup according to an embodiment of the present invention;

Figure 2 is a schematic diagram for explaining the principle of correcting a spherical aberration using a liquid crystal element;

Figure 3 illustrates intensity distribution of a light beam received by a quadrant photodetector during recording and/or reproducing of a single-layer optical disc;

Figure 4 is a graph illustrating an S-curve representing a focus error signal when light intensity has the distribution shown in Figure 3;

Figure 5 is a diagram for explaining a focus offset;

Figure 6 schematically illustrates the configuration of a double-layer optical disc;

Figure 7A illustrates a beam being focused onto layer L0 of a double-layer optical disc during reproduction of the recording layer L0, and FIG;

Figure 7B illustrates a beam going back to a photodetector from layer L1 during reproduction of the layer L0 shown in Figure 7A;

Figure 8 is a graph showing the light intensity returned from the recording layer L1 among the light intensity received by the photodetector during recording/reproduction of the recording layer L0, which is normalized to the light intensity returned from the recording layer L0;

Figure 9A illustrates light intensity distribution in a quadrant photodetector during recording/reproduction of recording layer L1 having a thickness of 90 $\mu$m;

Figure 9B illustrates light intensity distribution in the quadrant photodetector during recording/reproduction of recording layer L0 having a thickness of 115 $\mu$m;

Figure 10A is a graph illustrating an S-curve representing a focus error signal during reproduction of recording layer L1;

Figure 10B is a graph illustrating an S-curve representing a focus error signal during reproduction of recording layer L0;

Figure 11 is a schematic diagram of a photodetector that can be applied to the optical pickup of Figure 1 according to an embodiment of the present invention;

Figures 12A-12C schematically illustrate intensity distributions of light received by the photodetector of Figure 11 during reproduction of a single-layer optical disc, recording layer L1 of a double-layer optical disc, and recording layer L0 of the double-layer optical disc, respectively;

Figures 13A-13C are graphs illustrating S-curves for focus error signals with the light intensity distributions shown in Figures 12A-12C during reproduction of single-layer optical disc, recording layer L1 of the double-layer optical disc, and recording layer L0 of the double-layer optical disc, respectively;

Figure 14 is a schematic diagram of a photodetector that can be applied to the optical pickup of Figure 1 according to another embodiment of the present invention;

Figure 15 illustrates a light-blocking element (light intensity distribution changing element) disposed on a light-receiving surface of a photodetector according to an embodiment of the present invention;

Figures 16A and 16B illustrate the intensity distributions of light received by the photodetector of Figure 15 during recording/reproduction of recording layers L1 and L0, respectively;

Figure 17 illustrates a light-blocking element (light intensity distribution changing element) disposed on a light-receiving surface of a photodetector according to another embodiment of the present invention;

Figure 18 illustrates a light-blocking element (light intensity distribution changing element) disposed on a light-receiving surface of a photodetector according to another embodiment of the present invention;

Figure 19 illustrates a light-blocking element (light intensity distribution changing element) disposed on a surface of an objective lens according to an embodiment of the present invention;

Figure 20A schematically illustrates intensity distribution of light received by a photodetector during recording/reproduction of recording layer L1 when the light-blocking element of Figure 19 is used;

Figure 20B schematically illustrates intensity distribution of light received by the photodetector during recording/reproduction of recording layer L0 when the light-blocking element of Figure 19 is used;

Figure 21 illustrates a light-blocking element (light intensity distribution changing element) disposed on a surface of an objective lens according to another embodiment of the present invention;

Figure 22 is a graph illustrating a focus offset with respect to a change in position of a radius blocked when the radius of a light spot received by a photodetector is normalized to 1 and a width of a light-blocking region or gap is 0.1; and

Figure 23 schematically illustrates the construction of an optical recording and/or reproducing apparatus employing an optical pickup according to the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

An optical pickup according to the present invention is configured so that a spherical aberration due to a thickness difference is corrected in a beam that is emitted on a recording medium, i.e., an optical disc, where aberration remains in a beam that is reflected from the optical disc toward a photodetector due to a phase difference generated to correct the spherical aberration.

Hereinafter, the thickness of the optical disc refers to a thickness from a light incident surface of the optical disc on which a recording and/or reproducing beam is emitted to a target recording layer. A thickness difference in the optical disc (recording medium) refers to a difference from a thickness for which an objective lens is designed.

For a double-layer optical disc with dual recording layers per side, an objective lens is optimized with respect to approximately the midpoint between the two recording layers or either recording layer. Thus, when the thickness of a recording layer deviates from the thickness for which the objective lens is designed, spherical aberration due to the thickness difference must be corrected.

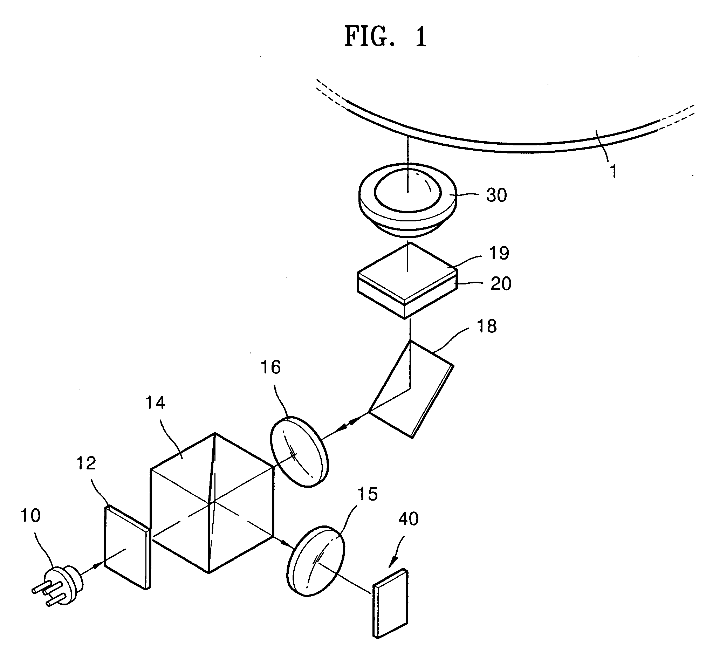

Referring to Figure 1, an optical pickup according to the present invention includes a light source 10, an objective lens 30 that focuses a beam emitted by the light source 10 to a spot on a recording medium, i.e., an optical disc 1, a correcting element such as a liquid crystal element 20 that generates a phase difference in order to correct spherical aberration induced by a thickness difference in the optical disc 1, a photodetector 40 that receives a beam reflected from the optical disc 1 and detects an information signal and/or an error signal, and an optical element. The optical element is designed to alleviate the effect of a region of a beam whose intensity is high due to aberration remaining on a beam that has been directed toward the photodetector 40 during a signal detection operation in the photodetector 40.

To meet demands for a high efficiency optical recording system, the optical pickup of an embodiment of the present invention further includes a polarization-dependent light path changer such as a polarization beam splitter 14 that changes the propagation path of an incident beam depending on its polarization and a quarter waveplate 19 that is disposed between the light path changer and the objective lens 30 and changes the polarization of an incident beam.

In Figure 1, reference numeral 12 denotes a grating that splits light emitted by the light source to detect a tracking error signal using a three-beam method or differential push-pull (DPP), reference numeral 16 denotes a collimating lens that collimates a divergent beam emitted by the light source 10 to a parallel beam so that it is incident on the objective lens 30, reference numeral 15 denotes an astigmatic lens that introduces astigmatism so as to detect a focus error signal by an astigmatic method, and reference numeral 18 denotes a reflective mirror that turns the propagation path of an incoming beam.

The light source 10 emits light of a predetermined wavelength, e.g., blue light of 405 nm wavelength that satisfies advanced optical disc (AOD) and blu-ray disc (BD) formats. In an embodiment of the invention objective lens 30 has a high numerical aperture (NA) that satisfies the BD format, e.g., approximately 0.85 NA. When the light source 10 emits blue light and the objective lens 30 has an NA of 0.85 as described above, the optical pickup of the present invention may record and/or reproduce the high density optical disc 1, and in particular, the optical disc 1 having the BD format. Here, various changes in the wavelength of the light source 10 and the NA of the objective lens 30 may be made. Furthermore, the optical pickup may have other various configurations.

For example, to record and/or reproduce a DVD disc with a plurality of recording layers per side using the optical pickup of the present invention, the light source 10 may emit red light suitable for a DVD, e.g., light with 650 nm wavelength, and the objective lens 30 may have an NA of 0.65 so as to be suitable for DVD.

Furthermore, to achieve compatibility among BD, AOD, and DVD formats, the optical pickup may include a light source module that emits light with a plurality of wavelengths. For example, blue light, suitable for a high density optical disc and red light suitable for a DVD disc, may be used. To achieve the same purpose, the objective lens 30 may be designed to achieve effective NAs suitable for both BD and DVD formats, or the optical pickup may further include a separate element for adjusting effective NAs. The optical pickup may include separate optical elements to record and/or reproduce DVD and/or CD discs in addition to the optical configuration shown in Figure 1 to record and/or reproduce a high density optical disc.

The polarization-dependent light path changer allows the beam that is incident from the light source 10 to reflect toward the objective lens 30 while allowing the beam that is reflected from the optical disc 1 to reach the photodetector 40. In Figure 1, the polarization-dependent light path changer is the polarization beam splitter 14 that selectively transmits or reflects the incident beam depending on the polarization. Alternatively, the polarization-dependent light path changer may be a polarization holographic optical element that transmits one polarized beam emitted from the light source 10 and diffracts the other polarized beam reflected from the optical disc 1 into plus or minus first-order beams.

One linearly polarized beam (e.g., P-polarized beam) emitted from the light source 10 toward the polarization beam splitter 14 passes through a mirror surface of the polarization beam splitter 14, is transformed into one circularly polarized beam while passing through the quarter waveplate 19, and is incident on the optical disc 1. The one circularly polarized beam is reflected from the optical disc 1 and transformed into the other circularly polarized beam. The other circularly polarized beam again passes through the waveplate 4 and it is transformed into the other linearly polarized beam such as an S-polarized beam that is in turn reflected from the mirror surface of the polarization beam splitter 14 toward the photodetector 40.

While the multi-layer optical disc 1 having a plurality of recording layers on at least one side thereof is being recorded and/or reproduced, in an embodiment of the invention, the correcting element compensates for spherical aberration due to a thickness difference when a thickness from a light incident surface of the optical disc 1 to a target recording layer is different from a thickness for which the objective lens 30 is designed. The optical pickup according to the present invention includes the liquid crystal element 20 as the correcting element.

Based on the polarization characteristic of liquid crystal, the liquid crystal element 20 selectively generates a phase difference depending on the polarization of an incident beam and electric power driving. Specifically, when the liquid crystal element 20 is turned on, the liquid crystal element 20 compensates for a spherical aberration caused by a thickness difference by creating a phase difference for one polarized beam, e.g., p-polarized beam, emitted from the light source 10 toward the optical disc 1 so that the wavefront of the p-polarized beam is changed. When the liquid crystal element 20 is turned off, the liquid crystal element 20 allows the incident beam to be transmitted irrespective of its polarization without creating a phase difference that changes the wavefront. The liquid crystal element 20 is disposed between the light path changer and the quarter waveplate 19 so that the beam emitted from the light source 10 onto the liquid crystal element 20 has a different polarization from the beam reflected from the optical disc 1 to the liquid crystal element 20.

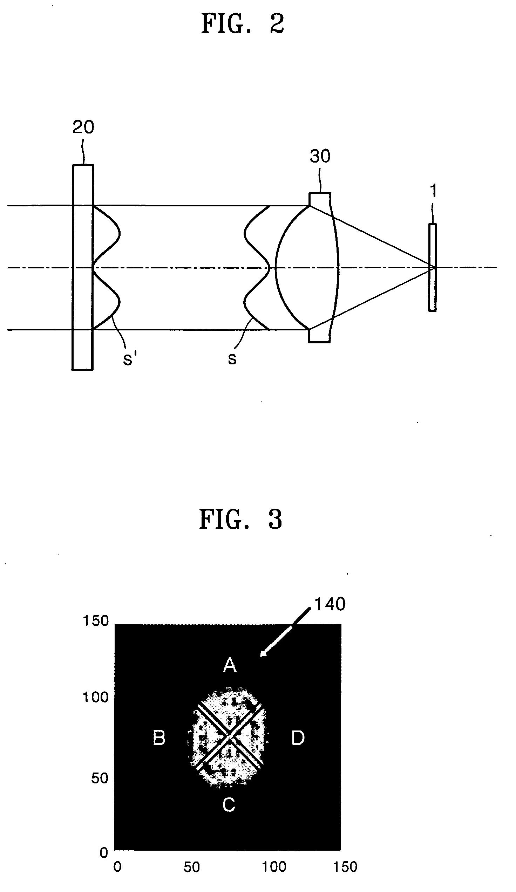

In Figure 2, S denotes a wavefront, that is, a phase distribution of spherical aberrations introduced into a beam collected by the objective lens 30 and focused on a recording layer of the optical disc 1 due to a difference between the thickness of the optical disc 1 and a thickness for which the objective lens 30 is designed. S' denotes a wavefront, that is, a phase distribution created by the liquid crystal element 20 to correct the spherical aberration induced by the thickness difference.

Figure 2 shows the phase distributions S and S' when the optical pickup includes the collimating lens 16 that is disposed on an optical path between the light source 10 and the objective lens 30 and collimates a divergent beam emitted by the light source 10 to a parallel beam and the parallel beam is incident on the liquid crystal element 20, as shown in Figure 1. As shown in Figure 2, to compensate for the spherical aberration caused by the thickness difference in the optical disc 1, the liquid crystal element 20 may be designed and driven such that the beam that has passed through the liquid crystal element 20 is transformed into a beam having an opposite phase distribution to that of the spherical aberration, which is then incident on the objective lens 30.

However, when the liquid crystal element 20 is used to correct the spherical aberration due to the thickness difference in the optical disc 1 as described above, some problems, which are due to the polarization characteristic of liquid crystal, occur. More specifically, in an embodiment of the invention, the optical pickup of the present invention uses the polarization-dependent light path changer and the quarter waveplate 19 in order to meet demands for a high efficiency optical recording system. If the liquid crystal element 20 is designed to generate a phase difference only for a p-polarized beam during turn-on in such a way as to correct spherical aberration induced by the thickness difference, the p-polarized beam incident on the liquid crystal element 20 has a phase distribution, i.e., wavefront, which may correct a spherical aberration, and the p-polarized beam is transformed into one circularly polarized beam after passing through the quarter waveplate 19 and then focused onto the optical disc 1. The beam reflected from the optical disc 1 is changed into the other circularly polarized beam and into an s-polarized beam after passing through the quarter waveplate 19, which is then incident on the liquid crystal element 20. However, since the liquid crystal element 20 does not create a phase difference for the s-polarized beam, the s-polarized beam passes through the liquid crystal element 20 without undergoing a wavefront change.

Thus, the beam, which extends toward a light receiving part, contains residual aberration due to a phase difference that is created to correct a spherical aberration induced by the thickness difference. The residual aberration is a spherical aberration having an opposite phase distribution to that which is caused by the thickness difference. The residual aberration increases a focus offset such that playback and/or recording characteristics during a layer jump on a multi-layer optical disc are degraded and a decrease in a margin for servo control occurs.

A focus offset caused by the residual aberration will now be described in detail. Figure 3 illustrates the intensity distribution of a light beam received by a quadrant photodetector 140 during a recording and/or reproducing of a 100 μm thick single-layer optical disc with the objective lens 30 designed to have an NA of 0.85 for a beam of light having a wavelength of 405 nm and an optical disc thickness 100 μm (0.1 mm).

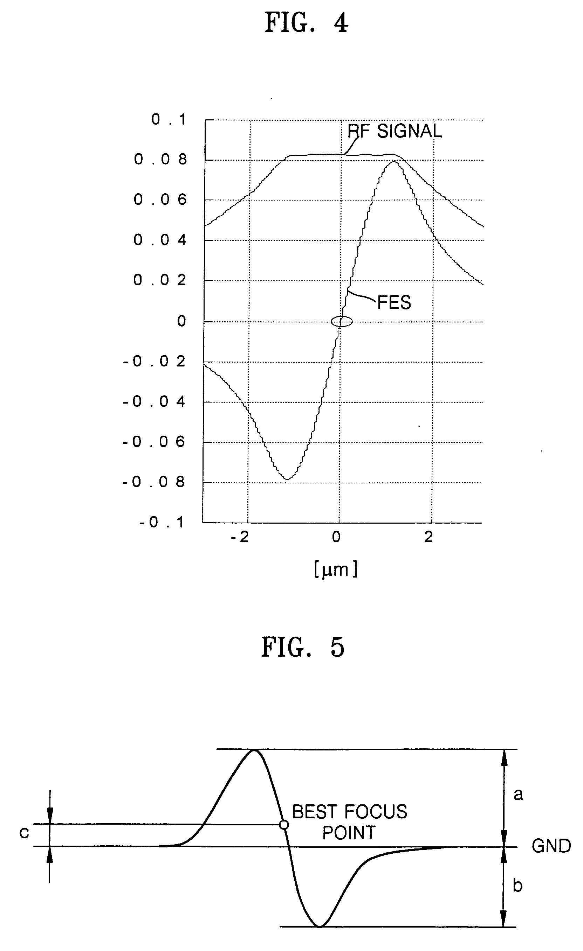

For example, since spherical aberration does not occur due to a thickness difference during playback of a single-layer optical disc with the same thickness as that for which the objective lens 30 is designed, the liquid crystal element 20 is turned off. Thus, since no residual aberration caused by spherical aberration correction is present in a beam traveling toward the photodetector 40, distribution of a light beam that is received by the photodetector 40 is nearly uniform as shown in Figure 3. Where two light-receiving areas of the photodetector 40 or signals detected therefrom, the sum of which is used to detect a focus error signal FES by an astigmatic method, are A and C, and the other two light-receiving areas or signals detected therefrom are B and D as shown in Figure 3, the focus error signal FES is defined by (A+C)-(B+D) and takes the form of an S-curve as illustrated in Figure 4.

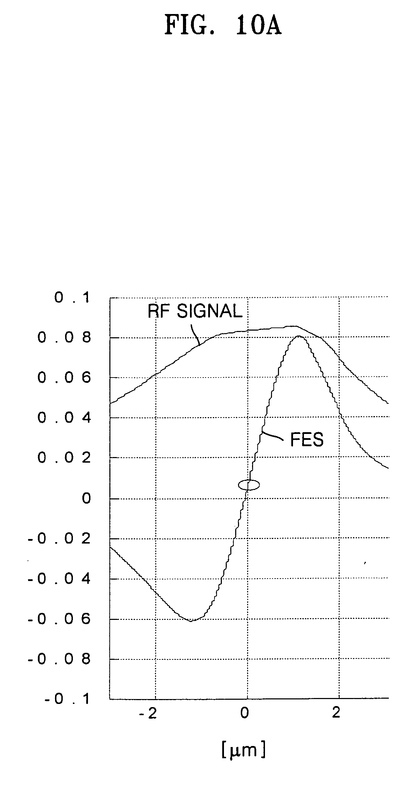

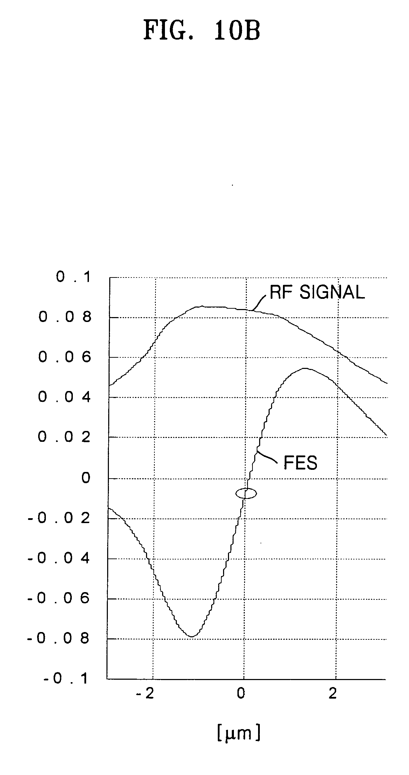

The horizontal axes in graphs illustrated in Figure 4 and FIGS, 10A and 10B (to be described later) represent the relative distance between the optical disc 1 and the objective lens 30, that is, a distance deviated from the best focus position. The distance is expressed in micrometers (μm). The vertical axes represent a reproduced information signal (RF signal) and a focus error signal FES detected by an astigmatic method (expressed in arbitrary units). As is evident by Figure 4, a focus offset is almost 0 during recording and/or reproducing of the single-layer optical disc 1. Referring to Figure 5., where a distance from ground (GND) to the peak of an S-curve representing a focus error signal is a, a distance from the GND to the bottom is b, and a distance from the GND to the best focus point is c as shown in Figure 5, a focus offset is defined by Equation (3):

$$\text{Focus offset} = \frac{c}{a+b} \times 100\% \qquad (3)$$

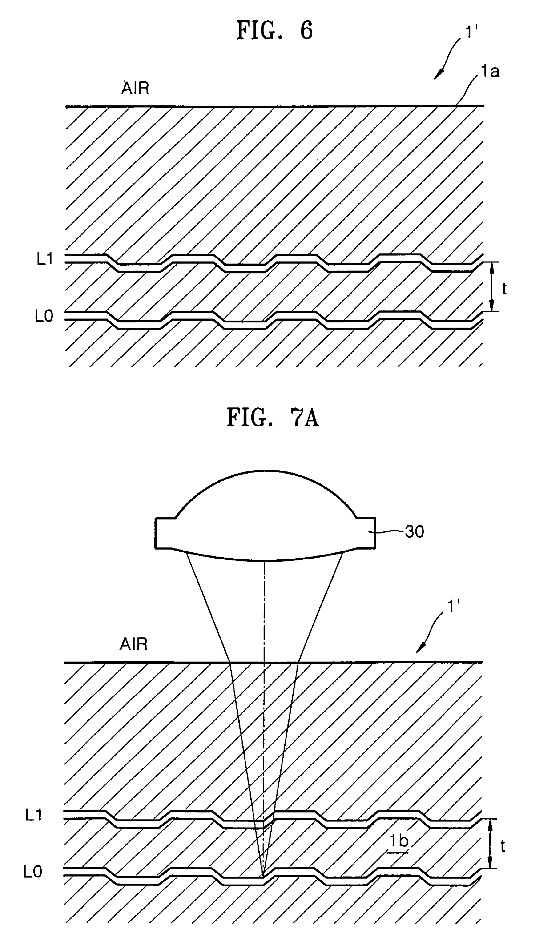

Figure 6 schematically illustrates the configuration of a double-layer optical disc 1'. Referring to Figure 6, while recording layer L0 in the double-layer optical disc 1' is located farther away from a light incident surface 1a, recording layer L1 is located closer to the same. A spacing t between the recording layers L0 and L1 is around 25 μm.

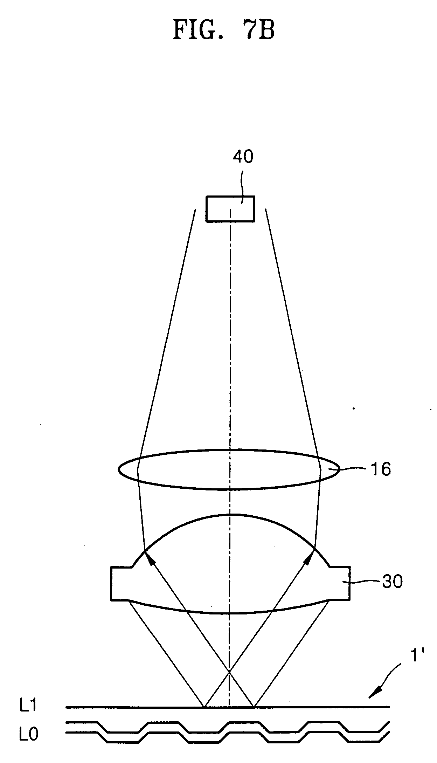

A method to determine the smallest thickness that minimizes the interlayer crosstalk in the double-layer optical disc 1' will now be described. Figure 7A illustrates light being focused onto the recording layer L0 during its reproduction, and Figure 7B illustrates light returning to the photodetector 40 from the recording layer L1 during reproduction of the recording layer L0. As shown in Figures 7A and 7B, a certain light intensity of light that is returned to the photodetector 40 is returned from the recording layer L1 to the photodetector 40 during reproduction of the recording layer L0.

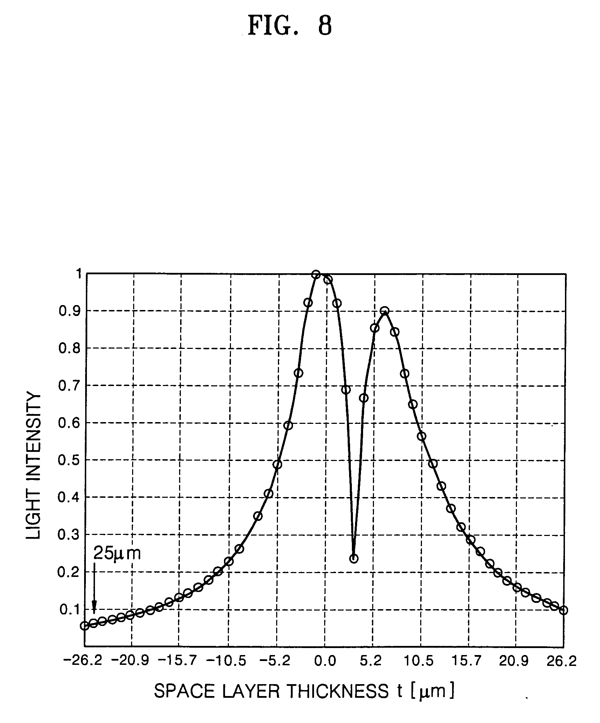

As is evident by Figure 8, the light intensity of the light that is returned from the photodetector 40 varies depending on the thickness t of a spacer layer 1b. In Figure 8, the abscissa denotes the thickness of a spacer layer expressed in micrometers (μm), and the ordinate denotes the light intensity returned from the recording layer L1 among light received by the photodetector 40 during recording and/or reproducing of the recording layer L0 normalized to that returned from the recording layer L0. With reference to the graph of Figure 8, the smallest thickness of the spacer layer 1b that minimizes the interlayer crosstalk may be around 25 μm. This thickness corresponds to light intensity of 10% returned from the recording layer L1 during recording and/or reproducing of the recording layer L1.

It is assumed that the thicknesses of recording layers L1 and L0 from the light incident surface 1a of the double-layer optical disc 1' are 90 and 115 μm, and the objective lens 30 is designed to have an NA of 0.85 for light having a wavelength of 405 nm and optical disc thickness 100 μm, as in Figure 3. Here, when a thickness for which the objective lens 30 is designed is the midpoint between the thicknesses of the two recording layers L0 and L1 on the double-layer optical disc 1' being recorded and/or reproduced by the optical pickup of the present invention, the liquid crystal element 20 is, in an embodiment of the invention, formed to generate phase differences to compensate for spherical aberrations during the recording and/or reproduction operations of the respective recording layers L0 and L1. When the thickness for which the objective lens 30 is designed is equal to the thickness of either recording layer L0 or L1 as described above, the liquid crystal element 20 may be formed to generate a phase difference to correct for spherical aberration only during recording and/or reproduction of the other recording layer.

When the thickness for which the objective lens 30 is designed corresponds to the midpoint between the thicknesses of the two recording layers L0 and L1, the liquid crystal element 20 remains in an ON-state to compensate for spherical aberration that is induced by a difference between the thickness for which the objective lens 30 and thickness from the light incident surface 1a to either recording layer L1 or L0 during the recording and/or reproduction operations of the recording layer L1 or L2 on the double-layer optical disc 1'.

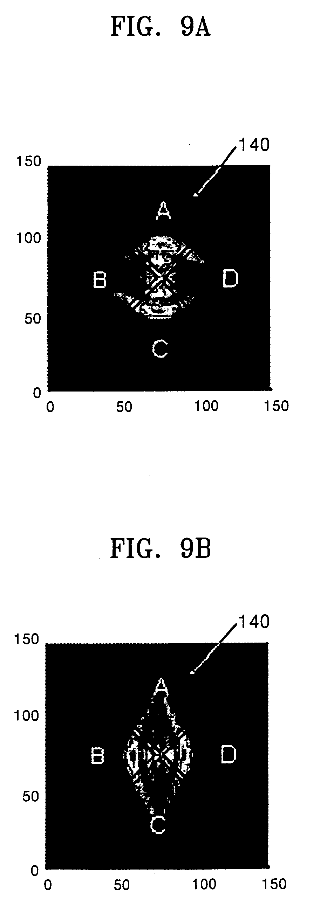

However, a beam directed toward a light receiving part contains residual aberration due to the phase difference created to correct the spherical aberration. This may result in uneven intensity distribution of a light beam that is received by the photodetector 40 in which a high intensity region (e.g. a peak) appears as shown in Figures 9A and 9B. Figures 9A and 9B illustrate light intensity distributions in the quadrant photodetector 140 during recording/reproduction of recording layers L1 and L0 having thicknesses of 90 and 115 μm, respectively.

In contrast to Figure 3 showing the case where no residual aberration occurs during recording and/or reproduction of the single-layer optical disc with the same thickness as that for which the objective lens 30 is designed, peaks occur in the two light-receiving areas A and C and the other two light-receiving areas B and D during recording and/or reproduction of the recording layers L1 and L0, respectively, in Figures 9A and 9B. The presence of a peak that is a high light intensity region causes a focus offset to occur.

Figures 10A and 10B are graphs illustrating S-curves representing focus error signals FES during reproduction of recording layers L1 and L0, respectively. The abscissas in Figures 10A and 10B denote the same as that which is illustrated in Figure 4.

The following Table 1 indicates focus offsets generated due to residual aberration during recording/reproduction of single-layer and double-layer optical discs when the light intensity distributions have the same patterns as those in Figures 3, 9A and 9B, respectively.

<Table 1>

|  |  | Focus Offset |
|---|---|---|
| SL |  | 0% |
| DL | L1 | 4.6% |
|  | L0 | -5.5% |

As indicated in Table 1, a large focus offset occurs, which is due to residual aberration induced by a phase difference created to correct for spherical aberration when recording/reproducing a recording layer having a thickness that deviates from the thickness for which the objective lens 30 is designed. The focus offset cannot only degrade reproduction and/or recording characteristics during a layer jump but also may decrease a margin of focus servo control.

To overcome these problems, considering that aberration due to the phase difference created by the liquid crystal element 20 remains in a beam that is reflected from the optical disc 1 toward the photodetector 40, an optical pickup of the present invention includes an optical element designed to prevent at least a part of a region of beam whose intensity is high due to the residual aberration from being detected by the photodetector 40 or to reduce the effect of the high intensity region of the beam.

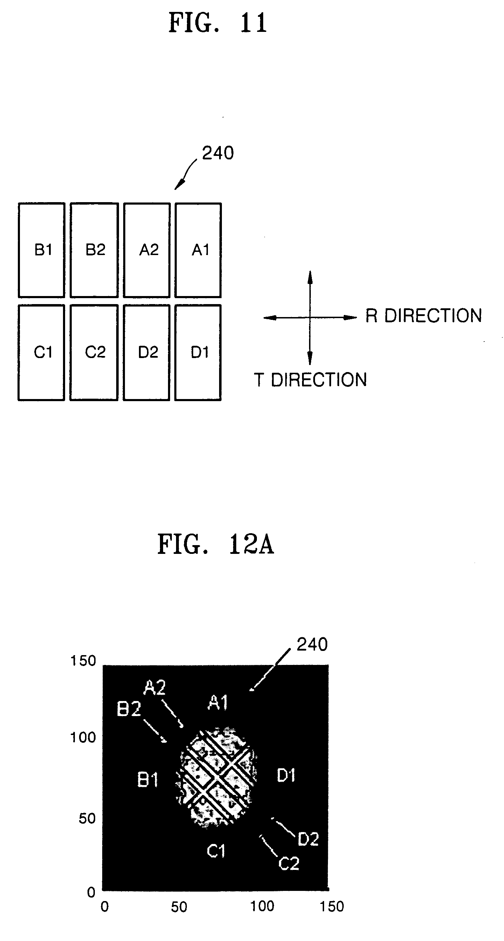

An optical pickup according to an embodiment of the present invention may include a photodetector designed to prevent detection of a beam in at least a part of the high intensity region. For example, a photodetector 240 of Figure 11 may be used as the photodetector 40 of Figure 1. Referring to Figure 11, the photodetector 240 is segmented into a plurality of light-receiving areas A1, A2, B1, B2, C1, C2, D1, and D2 and, in an embodiment of the invention, is designed and/or arranged so that at least a part of a high intensity region of beam is incident into a gap between the light-receiving areas.

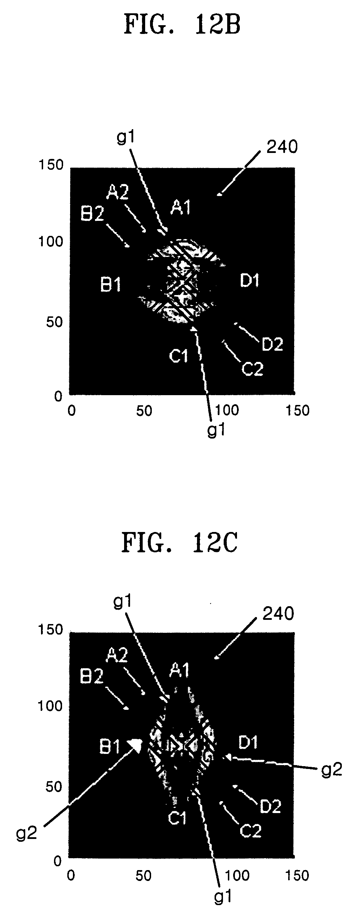

Figures 12A-12C schematically illustrate intensity distributions of light received by the photodetector 240 of Figure 11 during reproduction of single-layer optical disc, recording layer L1 of a double-layer optical disc, and recording layer L0 of the double-layer optical disc, respectively. The light intensity distributions shown in Figures 12A-12C are substantially the same as those shown in Figures 3, 9A, and 9B, respectively. As shown in Figure 12B, the photodetector 240 is, in an embodiment of the invention, designed and/or arranged in such a manner that at least a part of a high intensity region of beam is incident into gaps g1 between the light-receiving areas A1 and A2 and between C1 and C2 during recording/reproduction of recording layer L1 of the double-layer optical disc 1. Furthermore, as shown in Figure 12C, the photodetector 240 is designed and/or arranged in such a manner that at least a part of high intensity region of the beam is incident into gaps g2 between the light-receiving areas B1 and B2 and between D1 and D2 during recording/reproduction of the recording layer L0 of the double-layer optical disc 1.

The light receiving areas A1 and A2, B1 and B2, C1 and C2, and D1 and D2 of the photodetector 240 of Figure 11 correspond to those created by dividing the light-receiving areas A, B, C, and D of the quadrant photodetector 140 shown in FIGS, 3, 9A, and 9B into two halves in a radial R direction, respectively.

In contrast to the photodetector 140 shown in Figure 9A, as shown in Figure 12B, the photodetector 240 is designed and/or arranged in such a way that a peak is located in the gaps g1 between the light-receiving areas A1 and A2 and between the light-receiving areas C1 and C2 during recording/reproduction of recording layer L1. In contrast to the photodetector 140 shown in Figure 9B, as shown in Figure 12C, the photodetector 240 is designed and/or arranged in such a way that a peak is located in the gaps g2 between the light-receiving areas B1 and B2 and between the light-receiving areas D1 and D2 during recording/reproduction of recording layer L0. In other words, the photodetector 240 is, in an embodiment of the invention, designed and/or arranged such that a portion of a peak light intensity which occurs due to spherical aberration remaining in a light receiving part is located in the gaps g1 and g2 between the eight respective light-receiving areas of the photodetector 240.

Where the radius of a light spot on the photodetector 240 is R, the photodetector 240 is designed and/or arranged such that the gaps g1 or g2 between the light-receiving areas are located within the range of 0.2R to 0.6R of the light spot. By dividing the photodetector 240 such that the gaps g1 or g2 can be located in this way, a focus offset can be minimized. Here, the width of a gap in a typical photodetector is approximately 5 μm. This is because a gap that is too wide may degrade an RF signal. Thus, in an embodiment of the invention, the photodetector 240 includes the gaps g1 and g2 with widths of approximately 5 μm.

When the photodetector 240 is designed such that at least a part of a region of a beam whose intensity is high due to residual aberration is incident into a gap between the light-receiving areas so as to prevent detection of the high intensity region of the beam, it is possible to reduce the effect of the high intensity region of the beam on a signal detected by the photodetector 240, thereby minimizing a focus offset.

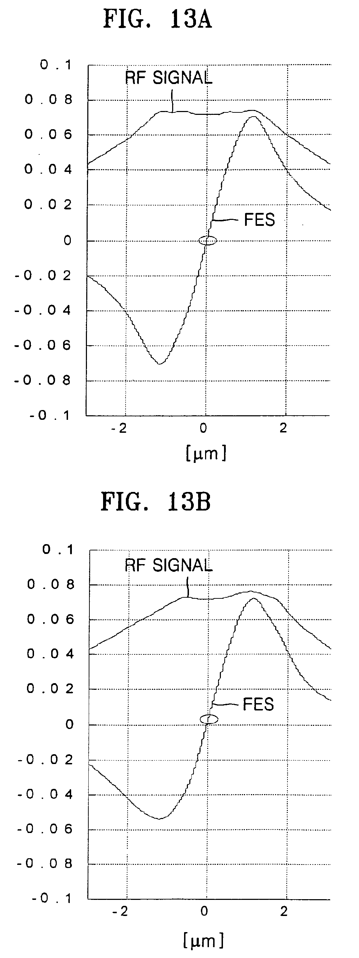

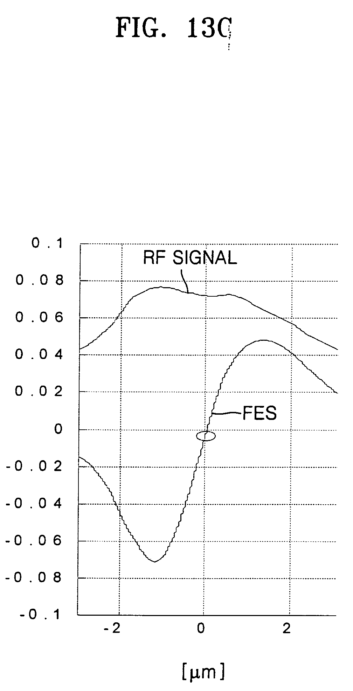

Figures 13A-13C illustrate S-curves representing focus error signals FES during reproduction of a single-layer optical disc and recording layers L1 and L0 of a double-layer optical disc, respectively. In this case, the focus error signal FES is calculated as FES=(A1+A2+C1+C2)-(B1+B2+D1+D2). The abscissas in Figures 13A-13C denote the same as that which is illustrated in Figure 4.

The following Table 2 indicates focus offsets generated due to residual aberration during recording/reproduction of single-layer and double-layer optical discs when the light intensity distributions have the same patterns as those in Figures 12A-12C, respectively.

<Table 2>

|  |  | Focus Offset |
|---|---|---|
| SL |  | 0% |
| DL | L1 | 2.5% |
|  | L0 | -2.8% |

From comparisons between Figures 3, 9A, and 9B vs. Figures 12A-12C and between Table 1 vs. Table 2, it can be seen that the focus offset may be reduced by approximately 50% in the optical pickup according to an embodiment of the present invention.

Thus, when in an optical recording and/or reproducing apparatus that records/reproduces a multi-layer optical disc having a plurality of recording layers per side, the simple polarization-dependent liquid crystal element 20 is used to create a phase difference according to an applied voltage to correct for spherical aberration due to a thickness difference. Thus, the optical pickup of the present invention may reduce a focus offset during a layer jump, which is caused by residual aberration contained in a beam extending toward a light receiving part.

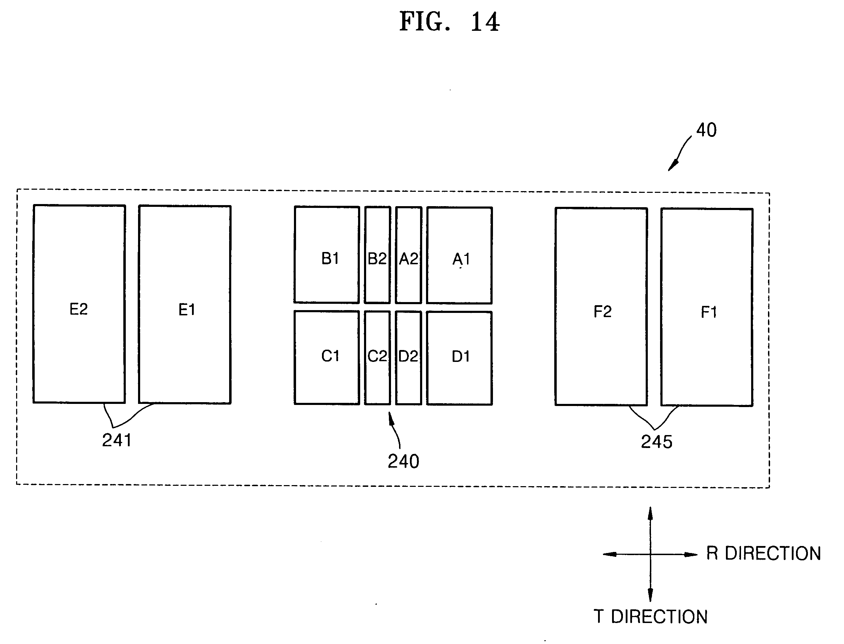

Figure 14 is a schematic diagram of the photodetector 40 that may be applied to the optical pickup of Figure 1 according to another embodiment of the present invention. When light emitted by the light source 10 is split into three or more beams by the grating 12 as shown in Figure 1, in addition to the photodetector 240, which is segmented into eight sections, the photodetector 40 includes first and second sub photodetectors 241 and 245 that are disposed on either side of the photodetector 240 and which receive first and second sub beams, respectively. Here, a main beam that is received by the photodetector 240 is a zero-order diffracted beam and the first and second sub beams that are received by the first and second sub photodetectors 241 and 245 are plus and minus first-order diffracted beams from the grating 12.

As shown in Figures 11 and 14, the photodetector 240 is preferably divided into four or more sections along a radial R direction of the optical disc 1 in order to enable detection of a tracking error signal by a main push-pull (MPP) method. A photodetector IC (PDIC) is divided into a main PDIC at the center and two side PDICs. The MPP method uses the main PDIC to perform a push-pull operation. The photodetector 240 is further divided into two or more sections along a tangential T direction of the optical disc 1 to allow detection of a focus error signal FES by an astigmatic method and/or a tracking error signal TES by differential phase detection (DPD).

Figures 11 and 14 show an example of the photodetector 240 divided into eight sections A1, A2, B1, B2, C1, C2, D1, and D2: four sections in the R direction and two sections in the T direction. First and second sub photodetectors 241 and 245 are preferably divided into two halves E1 and E2 and F1 and F2 in the R direction, respectively, in order to allow detection of a tracking error signal by a DPP method.

Using the partitioned structure of the photodetector 40 of Figure 14 and optical configuration of the optical pickup of Figure 1, a focus error signal FES, a tracking error signal TES, and a reproduced information signal RF-SUM may be obtained as shown in Table 3:

<Table 3>

|  | ROM | Recordable |
|---|---|---|
| FES | Astigmatic method: (B1+B2+D1+D2)-(A1+A2+C1+C2) | |
| TES | DPD | Push-Pull:(B1+B2+C1+C2)-(A1+A2+D1+D2)<br>MPP: [(B 1 +C1)-(A1 +D1)]-$\alpha$[(B2+C2)-(A2+D2)]<br>DPP: [(B1+B2+C1+C2)-(A1+A2+D1+D2)]-$\beta$[(E2-E1)+(F2-F1)] |
| RF-SUM | A1+A2+B1+B2+C1+C2+D1+D2 | |

In Table 3, $\alpha$ and $\beta$ are gains, ROM denotes read-only media and "recordable" denotes recordable media such as R, RW, and RAM or high density recordable optical discs such as BD and AOD. Here, while DPP is mainly used for RAM-type media or BD, Push-Pull or MPP methods are mainly used for R/RW-type media. Additionally, DPP may be used for R/RW-type media as well as RAM-type media and BD.

The configuration of the photodetector 40 is not limited to those shown in Figures 11 and 14, but various modifications can be made thereto.

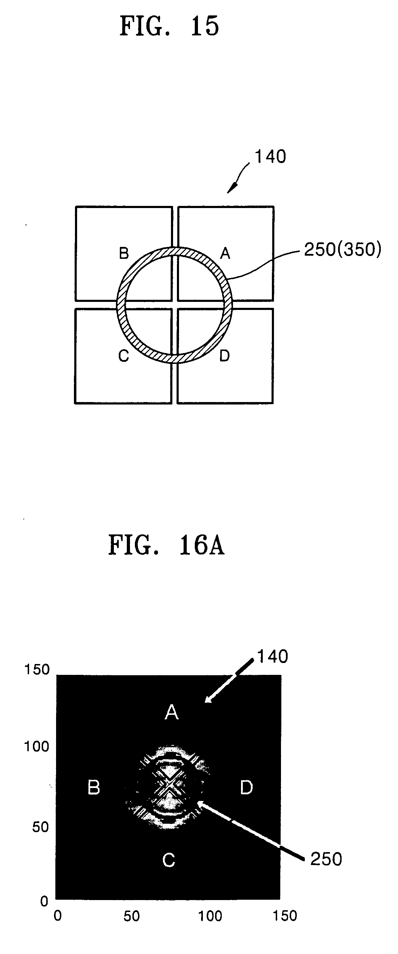

An optical element according to several embodiments of the present invention that may be applied to the optical pickup of the present invention to alleviate the effect of a region of a beam having a high intensity due to residual aberration on a detected signal will now be described with references to Figures 15-21. In this case, the photodetector 40 may be the quadrant photodetector 140, the photodetector 240 segmented into eight sections as shown in Figure 11, or the photodetector 240 coupled with the pair of sub photodetectors 241 and 245 as shown in Figure 14.

The optical pickup of the present invention may include the optical element that reduces the effect of a region of a beam having a high intensity due to residual aberration, which is contained in a beam reflected from the optical disc 1 toward the photodetector 40 and which is caused by a phase difference that is created to correct for spherical aberration, on a signal detected by the photodetector 40. The optical element may be a light-blocking element that prevents detection of at least a part of a high intensity region of a beam.

Figure 15 illustrates an example of a light-blocking element including a ring-shaped light-blocking element 250 that is located on a light-receiving surface of the photodetector 140 and that prevents transmission of a beam. Here, the light-blocking element may be the ring-shaped light-blocking region 250 itself, which formed on the light-receiving surface of the photodetector 140 or the light blocking element may be a structure in which the ring-shaped light-blocking region 250 is formed on a transparent base (not shown). The light-blocking region 250 may have a width of approximately 5 $\mu$m.

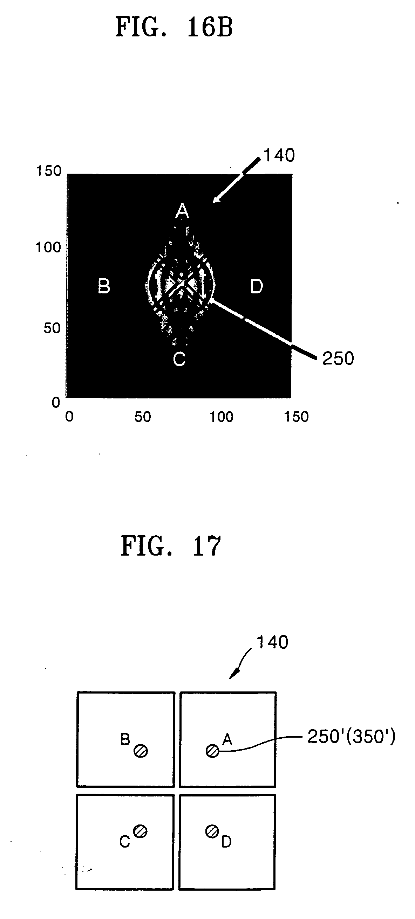

The ring-shaped light-blocking region 250, disposed on the light-receiving surface of the photodetector 140, prevents detection of at least a part of a high intensity region of the beam received by the photodetector 140 as shown in Figures 16A and 16B. Thus, reducing a focus offset as described above is possible. Here, Figures 16A and 16B illustrate the intensity distributions of a beam that is received by the photodetector 140 during recording/reproduction of recording layers L1 and L0, respectively.

Figure 17 illustrates an example of a light-blocking element including one or more local light-blocking regions 250', each of which blocks only at least a part of a high intensity region of a beam. Also in this case, the light-blocking element may be the one or more local light-blocking regions 250' itself formed on the light-receiving surface of the photodetector 140 or a structure in which the one or more light-blocking regions 250' are formed on a transparent base. Figure 17 illustrates an example in which the four local light-blocking regions 250' have been formed on the light-receiving surface of the photodetector 40 to block a peak intensity beam received by the photodetector 140 during recording/reproduction of recording layers L1 and L0 as shown in Figure 16A and 16B.

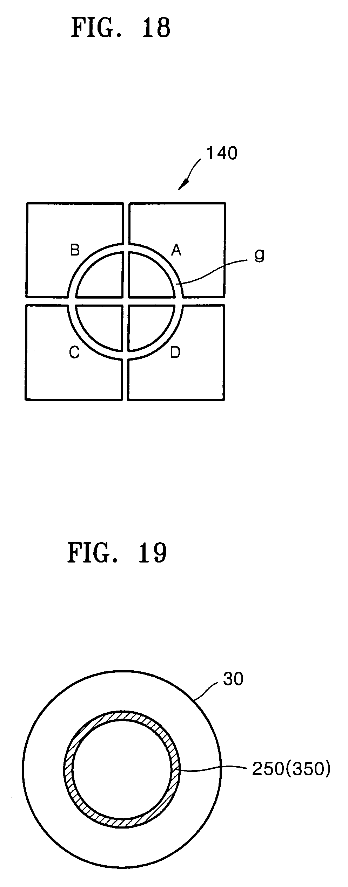

Referring to Figure 18, a light-blocking element may be a ring-shaped gap g with a predetermined width formed on the light-receiving surface of the photodetector 140. In an embodiment of the invention, the predetermined width is approximately 5 μm. Alternatively, the light-blocking element may be formed between the photodetector 40 and the astigmatic lens 15. In this case, it is possible to achieve substantially the same light-blocking effect as described with references to Figure 15, 17, and 18.

Referring to Figure 19, a light-blocking element may be disposed on the lens surface of the objective lens 30. Figure 19 illustrates an example of the light-blocking element including a ring-shaped light-blocking region 250 formed on the lens surface of the objective lens 30. In this case, the light-blocking element may be the ring-shaped light-blocking region 250 itself formed on the lens surface of the objective lens 30 or a structure in which the ring-shaped light-blocking region 250 is formed on a transparent base. In this case, the width of the ring-shaped light-blocking region 250 is preferably approximately 0.1 when the size of an entrance pupil of the objective lens 30 is normalized to 1.

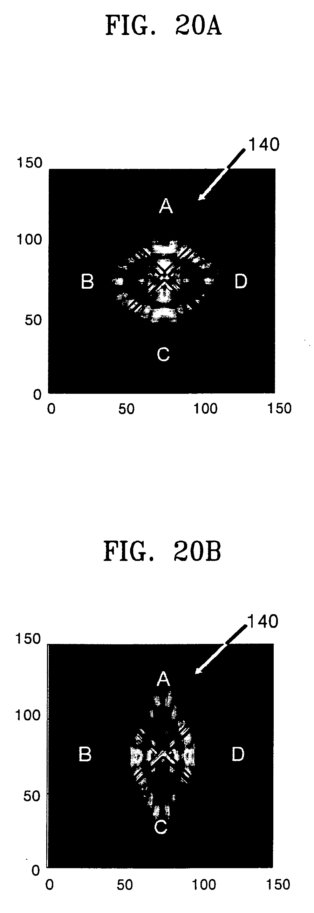

When the light-blocking element having the ring-shaped light-blocking region is disposed on the lens surface of the objective lens 30, as shown in Figures 20A and 20B, the light-blocking element prevents detection of at least a part of a region of a beam whose intensity is high due to residual aberration contained in the beam received by the photodetector 40. Thus, as described above, reducing a focus offset is possible. Here, Figures 20A and 20B schematically illustrate intensity distributions of light that are received by the photodetector 140 during recording/reproduction of recording layers L1 and L0, respectively.

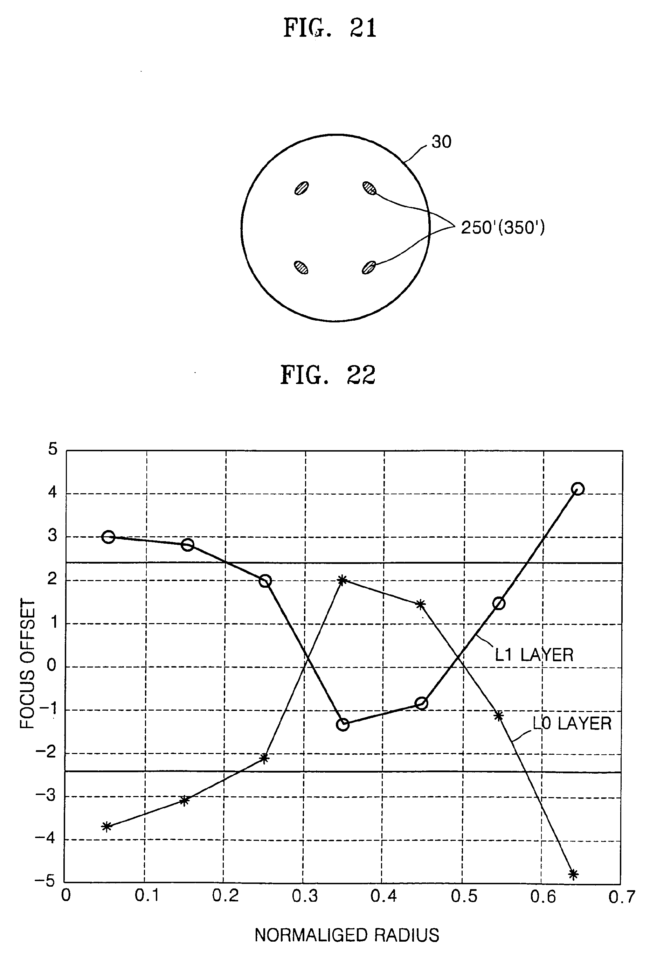

Figure 21 illustrates an example of the light-blocking element having the one or more local light-blocking regions 250' each of which is disposed on the lens surface of the objective lens 30 and which blocks only a part of a high intensity region of a beam. The light-blocking element may be the one or more local light-blocking regions 250' itself formed on the lens surface of the objective lens 30 or a structure in which the one or more light-blocking regions 250' are formed on a transparent base.

Figure 21 illustrates an example in which the four local light-blocking regions 250' have been formed on the lens surface of the objective lens 30 to prevent reception of a peak light intensity by the photodetector 40 during recording/reproduction of recording layers L1 and L0.

Alternatively, the light-blocking element may be mounted on an actuator (not shown) to control focusing and tracking of the objective lens 30 or may be disposed between the objective lens 30 and the astigmatic lens 15. In these cases, the same light-blocking effect may also be achieved as that which is described with reference to Figures 19 and 21.

Meanwhile, when the light-blocking element, i.e., the light-blocking region 250 or 250' is formed on the lens surface of the objective lens 30 or is disposed between the objective lens 30 and the polarization beam splitter 14, the light-blocking element may have a polarization characteristic so as to block only a beam that is reflected from the optical disc 1 toward the photodetector 40 or have a non-polarization characteristic so as to block both beams incident on and reflected from the optical disc 1.

The light-blocking element described with references to Figures 15-21 is, in an embodiment of the invention, designed to prevent detection of at least a part of the high intensity region of the beam in the range of 0.2R to 0.6R of a light spot where R denotes the radius of the light spot that is received by the photodetector 40.

Figure 22 illustrates a focus offset with respect to a change in position of a radius blocked when the radius of a light spot that is received on the photodetector 40 is normalized to 1 and a width of the light-blocking region 250 or 250' or gap g is 0.1. Here, the diameter of the light spot is 100 μm. As is evident by Figure 22, by blocking a portion of a beam in the range of 0.2 to 0.6 of the radius of the light spot during recording/reproduction of recording layers L1 and L0, suppressing a focus offset to less than approximately ±2.5% is possible.

Although the present invention has been described above with reference to the light-blocking element that prevents detection of a beam as an optical element that reduces the effect of a region of a beam whose intensity is high due to residual aberration on a signal detected by the photodetector 40, the optical element may be a light intensity distribution changing element instead of the light-blocking element.

Here, the light intensity distribution changing element may have substantially the same structure and position as the light-blocking element except that the light-blocking element is the gap g formed on the light-receiving surface of the photodetector 40. Thus, to avoid repeated description, reference numerals of holographic regions 350 and 350' used as the light intensity distribution changing element have been indicated next to reference numerals 250 and 250' of the light-blocking regions used as the light-blocking element in Figures 15, 17, 19, and 21.

Referring to Figures 15, 17, 19, and 21 and the above description for the light-blocking element, the light intensity distribution changing element may be disposed on the lens surface of the objective lens 30 or the light-receiving surface of the photodetector 40, or between the objective lens 30 and the photodetector 140. The light intensity distribution changing element is designed to enable detection of at least a part of a high intensity region of a beam by changing the intensity distribution of the beam into a uniform distribution.

As shown in Figures 15 and 19, the light intensity distribution changing element may be a ring-shaped holographic pattern region 350 having a predetermined width that is formed at a position corresponding to that of the ring-shaped light-blocking region 250 and changes the intensity distribution of light. Furthermore, as shown in Figures 17 and 21, the light intensity distribution changing element may include one or more local holographic pattern regions 350' that are formed at a position or positions corresponding to the local light-blocking regions 250' and change the intensity distribution of only a part of the high intensity region of the beam. In this case, as in the light-blocking element, the light intensity distribution changing element is, in and embodiment of the invention, designed to change the intensity distribution of at least a part of the high intensity region of the beam in the range of 0.2R to 0.6R of a light spot where R is the radius of a light spot received by the photodetector 140.

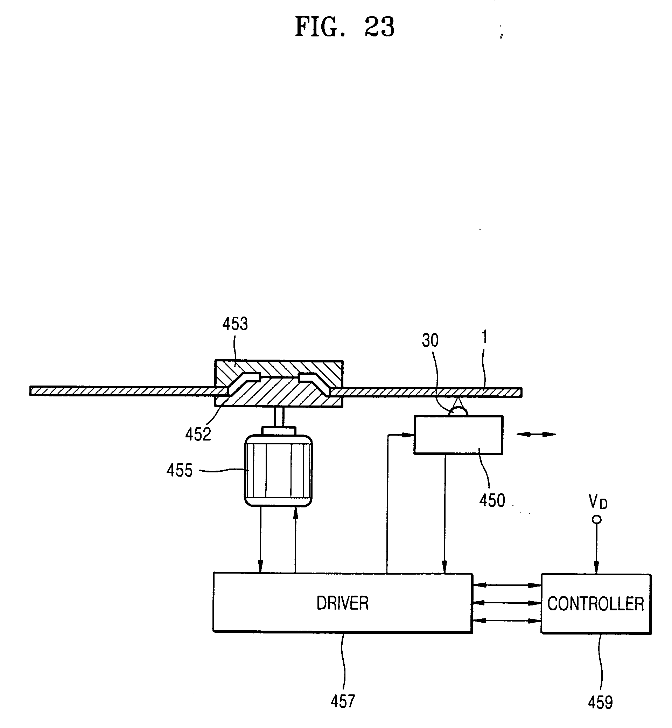

Figure 23 schematically illustrates the construction of an optical recording and/or reproducing apparatus employing an optical pickup according to the present invention.

Referring to Figure 23, the optical recording and/or reproducing apparatus includes a spindle motor 455 that rotates the optical disc 1 that is the optical information storage medium, an optical pickup 450 that is installed movably along a radial direction of the optical disc 1 and reproduces information and/or records information from and/or on the optical disc 1, a driver 457 that drives the spindle motor 455 and the optical pickup 450, and a controller 459 that controls focusing and tracking servos of the optical pickup 450. Here, reference numerals 252 and 253 denote a turntable and a clamp for chucking the optical disc 1, respectively.

The optical pickup 450 has the optical system configured above according to the present invention. A beam reflected from the optical disc 1 is detected by a photodetector mounted in the optical pickup 450 and is photoelectrically converted into an electrical signal that is then input to the controller 459 through the driver 457. The driver 457 controls the rotating speed of the spindle motor 455, amplifies the input signal, and drives the optical pickup 450. The controller 459 sends focus servo and tracking servo commands, which have been adjusted based on the signal received from the driver 457, back to the driver 457 so that the optical pickup may perform focusing and tracking operation.

An optical recording and/or reproducing apparatus including the optical pickup according to the present invention makes reducing a focus offset during a layer jump due to residual aberration contained in a beam traveling toward a light receiving part possible when correcting for spherical aberration induced by a difference in interlayer thickness by creating a phase difference upon application of voltage to a polarization-dependent liquid crystal element during recording and/or reproduction of a multi-layer optical disc having a plurality of recording layers per side.

As is described above, the present invention makes reducing a focus offset by reducing the effect of at least a part of a high intensity region of a beam on a signal detected by the photodetector possible even when aberration remains in a beam received by a photodetector due to a phase difference introduced by a correcting element for compensating for the spherical aberration.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An optical pickup apparatus comprising an optical pickup in which residual aberration is contained in a beam that is traveling toward a photodetector (40), the residual aberration being due to a phase difference created by a correcting element (20) to compensate for spherical aberration caused by a thickness difference in a recording medium (1), wherein the optical pickup reduces a focus offset by alleviating the effect of at least a part of a portion of the beam whose intensity is high due to the residual aberration on a signal detected by the photodetector (40).

2. An optical pickup comprising:

   a light source (10);

   an objective lens (30) to focus a beam emitted by the light source (10) to a spot on a recording medium (1) having a thickness;

   a photodetector (40) to receive the beam after the beam is reflected from the spot on the recording medium (1) and to detect a signal therefrom; and

   a correcting element (20) to create a phase difference in order to correct spherical aberration produced by the thickness of the recording medium (1) for the beam that is emitted by the light source (10) toward the recording medium (1);

   wherein the photodetector (40) includes a plurality of light receiving areas and a gap between the light receiving areas such that at least a part of a high intensity portion of the beam is incident into the gap between the light receiving areas, to prevent detection of at least the part of the high intensity portion of the beam, and wherein the high intensity portion of the beam occurs due to residual aberration and is caused by the phase difference generated to correct for spherical aberration contained in the beam that is reflected from the recording medium (1) toward the photodetector (40).

3. The optical pickup of claim 2, wherein where the radius of a light spot received on the photodetector (40) is R, the gap between the light receiving areas is located in the range of 0.2R to 0.6R of the light spot.

4. An optical pickup comprising:

   a light source (10);

   an objective lens (30) to focus a beam emitted by the light source (10) to a spot on a recording medium (1) having a thickness;

   a photodetector (40) to receive the beam after the beam is reflected from the spot on the recording medium (1) and to detect a signal therefrom;

   a correcting element (20) to create a phase difference in order to correct spherical aberration produced by the thickness of the recording medium (1) for the beam emitted by the light source (10) toward the recording medium (1); and

   an optical element to reduce the effect of a high intensity portion of the beam on a signal that is detected by the photodetector (40), wherein the high intensity portion of the beam occurs due to aberration remaining in a beam reflected from the recording medium (1) toward the photodetector (40) due to the phase difference generated for correction of spherical aberration.

5. The optical pickup of claim 4, wherein the optical element comprises a light-blocking element to prevent detection of at least the part of the high intensity portion of the beam.

6. The optical pickup of claim 5, wherein the light-blocking element is disposed on one of a lens surface of the objective lens (30), a light receiving surface of the photodetector (40), and between the objective lens (30) and the photodetector (40).

7. The optical pickup of claim 6, wherein the light-blocking element is a ring-shaped light-blocking region with a predetermined width to prevent detection of the beam.

8. The optical pickup of claim 7, wherein the width of the ring-shaped light-blocking region is substantially 5 μm.

9. The optical pickup of claim 6, wherein the light-blocking element comprises one or more local light-blocking regions to prevent detection of only a part of the high intensity portion of the beam.

10. The optical pickup of claim 5, wherein the light-blocking element is a ring-shaped gap with a predetermined width formed on a light receiving surface of the photodetector (40).

11. The optical pickup of any one of claims 5 through 10, wherein, where the radius of a light spot received on the photodetector (40) is R, the light-blocking element prevents detection of at least the part of the high intensity portion of the beam in the range of 0.2R to 0.6R of the light spot.

12. The optical pickup of claim 4, wherein the optical element comprises a light intensity distribution changing element to allow at least the part of the high intensity portion of the beam to be incident on the photodetector (40) by changing the intensity distribution of the beam into a uniform distribution.

13. The optical pickup of claim 12, wherein the light intensity distribution changing element changes the intensity distribution of a beam into a uniform distribution.

14. The optical pickup of claim 13, wherein the light intensity distribution changing element comprises a ring-shaped holographic pattern region with a predetermined width to change the intensity distribution of the beam or one or more local holographic pattern regions so as to change the intensity distribution of only the part of the high intensity portion of the beam.

15. The optical pickup of claim 12, wherein the light intensity distribution changing element is disposed on one of a lens surface of the objective lens (30), a light receiving surface of the photodetector (40), and between the objective lens (30) and the photodetector (40).

16. The optical pickup of any one of claims 12 through 15, wherein, where the radius of a light spot on the photodetector (40) is R, the light intensity distribution changing element changes the intensity distribution of at least the part of the high intensity portion of the beam within the range of 0.2R to 0.6R of the light spot into a uniform distribution.

17. The optical pickup of any one of claims 4 through 15, wherein the optical element has one of a polarization characteristic such that the optical element operates on only the beam that is reflected from the recording medium (1) toward the photodetector (40) and a non-polarization characteristic such that the optical element operates independently of the polarization of the beam that is incident on the recording medium (1).

18. The optical pickup of any one of claims 1 through 17, further comprising:

   a polarization-dependent light path changer that causes the beam emitted by the light source (10) to go toward the objective lens (30) and allows the beam reflected from the recording medium (1) to travel toward the photodetector (40).

19. The optical pickup of claim 18, further comprising a quarter waveplate that is disposed between the light path changer and the objective lens (30) and changes the polarization of an incident beam.

20. The optical pickup of claim 19, wherein the correcting element (20) is a liquid crystal element that is disposed between the light path changer and the quarter waveplate and selectively creates a phase difference depending on the polarization of the beam that is incident on the quarter waveplate.

21. The optical pickup of any one of claim 1 through 20, wherein the corrected spherical aberration is caused by a difference between a thickness for which the objective lens (30) is designed and a thickness from a light incident surface to a recording layer being recorded and/or reproduced in the recording medium (1) having a plurality of recording layers on at least one side thereof.

22. The optical pickup of claim 21, wherein the multi-layer recording medium (1) is a blu-ray disc (BD) having a plurality of recording layers on at least one side thereof, wherein the light source (10) emits light of wavelength suitable for a BD format, and wherein the objective lens (30) has a numerical aperture (NA) suitable for the BD format.

23. An optical recording and/or reproducing apparatus that records information and/or reproduces information on and/or from a recording medium (1) comprising an optical pickup that is movably installed along a radial direction of the recording medium (1) and has an optical configuration in which residual aberration is contained in a beam traveling toward a photodetector (40) due to a phase difference created by a correcting element (20) to compensate for spherical aberration caused by a thickness difference in the recording medium (1), wherein the optical pickup reduces a focus offset by alleviating the effect of at least a part of a portion of a beam whose intensity is high due to the residual aberration on a signal detected by the photodetector (40).

24. An optical recording and/or reproducing apparatus that records information and/or reproduce information on and/or from a recording medium (1) using an optical pickup that is installed movably along a radial direction of the recording medium (1), wherein the optical pickup comprises:

    a light source (10);

    an objective lens (30) to focus a beam emitted by the light source (10) to a spot on the recording medium (1) having a thickness;

    a photodetector (40) to receive the beam after the beam is reflected from the spot on the recording medium (1) and to detect a signal therefrom; and

    a correcting element (20) to create a phase difference in order to correct spherical aberration produced by the thickness of the recording medium (1) for the beam emitted by the light source (10) toward the recording medium (1), wherein the photodetector (40) includes a plurality of light receiving areas and a gap between the light receiving areas such that at least a part of a high intensity portion of the beam is incident into the gap between the light receiving areas, to prevent detection of at least the part of the high intensity portion of the beam, and wherein the high intensity portion of the beam occurs due to residual aberration and is caused by the phase difference generated to correct for spherical aberration contained in the beam that is reflected from the recording medium (1) toward the photodetector (40).

25. The apparatus of claim 24, wherein where the radius of a light spot received on the photodetector (40) is R, the gap between the light receiving areas is located in the range of 0.2R to 0.6R of the light spot.

26. An optical recording and/or reproducing apparatus that records information and/or reproduces information on and/or from a recording medium (1) using an optical pickup that is installed movably along a radial direction of the recording medium (1), wherein the optical pickup comprises:

    a light source (10);

    an objective lens (30) to focus a beam emitted by the light source (10) to a spot on the recording medium (1) having a thickness;

    a photodetector (40) to receive the beam after the beam is reflected from the spot on the recording medium (1) and to detect a signal therefrom;

    a correcting element (20) to create a phase difference in order to correct spherical aberration produced by the thickness of the recording medium (1) for the beam emitted by the light source (10) toward the recording medium (1); and

    an optical element to reduce the effect of a high intensity portion of the beam on a signal that is detected by the photodetector (40), wherein the high intensity portion of the beam occurs due to aberration remaining in the beam reflected from the recording medium (1) toward the photodetector (40) due to the phase difference generated for correction of spherical aberration.

27. The apparatus of claim 26, wherein the optical element comprises a light-blocking element to prevent detection of at least the part of the high intensity portion of the beam.

28. The apparatus of claim 27, wherein the light-blocking element is disposed on one of a lens surface of the objective lens (30), a light receiving surface of the photodetector (40), and between the objective lens (30) and the photodetector (40).

29. The apparatus of claim 28, wherein the light-blocking element is a ring-shaped light-blocking region with a predetermined width to prevent detection of the beam.

30. The apparatus of claim 29, wherein the width of the ring-shaped light-blocking region is substantially 5 μm.

31. The apparatus of claim 28, wherein the light-blocking element comprises one or more local light-blocking regions to prevent detection of only at least the part of the high intensity portion of the beam.

32. The apparatus of claim 27, wherein the light-blocking element is a ring-shaped gap with a predetermined width formed on a light receiving surface of the photodetector (40).

33. The apparatus of any one of claims 27 through 32, wherein where the radius of a light spot received on the photodetector (40) is R, the light-blocking element prevents detection of at least the part of the high intensity portion of the beam in the range of 0.2R to 0.6R of the light spot.

34. The apparatus of claim 26, wherein the optical element comprises a light intensity distribution changing element to allow at least the part of the high intensity portion of the beam to be incident on the photodetector (40) by changing the intensity distribution of the beam into a uniform distribution.

35. The apparatus of claim 34, wherein the light intensity distribution changing element changes the intensity distribution of a beam into a uniform distribution.

36. The apparatus of claim 35, wherein the light intensity distribution changing element further comprises a ring-shaped holographic pattern region with a predetermined width that changes the intensity distribution of the beam or one or more local holographic pattern regions that change the intensity distribution of only a part of the high intensity portion of the beam.

37. The apparatus of claim 34, wherein the light intensity distribution changing element is disposed on one of a lens surface of the objective lens (30), a light receiving surface of the photodetector (40), and between the objective lens (30) and the photodetector (40).

38. The apparatus of any one of claims 34 through 37, wherein, where the radius of a light spot on the photodetector (40) is R, the light intensity distribution changing element changes the intensity distribution of at least the part of the high intensity portion of the beam within the range of 0.2R to 0.6R of the light spot into a uniform distribution.

39. The apparatus of any one of claims 26 through 38, wherein the optical element has one of a polarization characteristic such that the optical element operates on only the beam that is reflected from the recording medium (1) toward the photodetector (40) and a non-polarization characteristic such that the optical element operates independently of the polarization of the beam that is incident on the recording medium (1).

40. The apparatus of any one of claims 23 through 39, further comprising:

an objective lens (30);

a light source (10) to emit a beam toward the objective lens (30); and

a polarization-dependent light path changer that causes the beam emitted by the light source (10) to go toward the objective lens (30) and allows the beam, reflected from the recording medium (1), to travel toward the photodetector (40).

41. The apparatus of claim 40, further comprising a quarter waveplate that is disposed between the light path changer and the objective lens (30) such that the beam is incident on the quarter waveplate to change the polarization of an incident beam.

**42.** The apparatus of claim 41, wherein the correcting element (20) is a liquid crystal element that is disposed between the light path changer and the quarter waveplate and selectively creates a phase difference depending on the polarization of the incident beam.

**43.** The apparatus of any one of claims 23 through 42, wherein the corrected spherical aberration is caused by a difference between a thickness for which the objective lens (30) is designed and a thickness from a light incident surface to a recording layer being recorded and/or reproduced in the recording medium (1) having a plurality of recording layers on at least one side thereof.

**44.** The apparatus of claim 43, wherein the multi-layer recording medium (1) is a blu-ray disc (BD) having a plurality of recording layers on at least one side thereof, wherein the light source (10) emits light of wavelength suitable for a BD format, and wherein the objective lens (30) has a numerical aperture (NA) suitable for the BD format.

**45.** An optical apparatus comprising an optical pickup having an optical configuration in which residual aberration, which is due to a phase difference created by a correcting element (20) to compensate for spherical aberration caused by a thickness difference in a recording medium (1), is contained in a beam traveling toward a photodetector (40), the optical pickup reducing a focus offset by alleviating the effect of at least a part of a portion of a beam whose intensity is high due to the residual aberration on a signal detected by the photodetector (40).

**46.** An apparatus that records or reproduces information on or from a recording medium (1), having a thickness, using an optical pickup including a light source (10) and an objective lens (30) to focus a beam that is emitted by the light source (10) to a spot the recording medium (1), the optical pickup comprising:

a correcting element (20) to create a phase difference in the beam in order to correct a spherical aberration in the beam that is produced by the thickness of the recording medium (1); and

a photodetector (40), including a light receiving area and a gap in the light receiving area such that at least a part of a high intensity portion of the beam, caused by the phase difference contained in the beam, is incident into the gap after the beam is reflected from the spot on the recording medium (1), the photodetector (40) to detect a signal from a portion of the beam that is incident on the light receiving areas.

**47.** An apparatus that records or reproduces information on or from a recording medium (1), having a thickness, using an optical pickup including a light source (10) and an objective lens (30) to focus a beam that is emitted by the light source (10) to a spot on the recording medium (1), wherein the optical pickup comprises:

a photodetector (40) to receive the beam after the beam is reflected from the spot on the recording medium (1) and to detect a signal therefrom;

a correcting element (20) to create a phase difference in the beam in order to correct spherical aberration produced by the thickness of the recording medium (1); and

an optical element to reduce the effect of a high intensity portion of the beam, which occurs due to the phase difference created by the correcting element (20), on the signal detected by the photodetector (40).

FIG. 1

# FIG. 2

# FIG. 3

# FIG. 4

# FIG. 5

FIG. 6

AIR

1'

1a

L1

L0

t

FIG. 7A

30

1'

AIR

L1

L0

1b

t

# FIG. 7B

# FIG. 8

# FIG. 9A

# FIG. 9B

EP 1 496 505 A2

# FIG. 10A

26

# FIG. 10B

# FIG. 11

# FIG. 12A

# FIG. 12B

# FIG. 12C

## FIG. 13A

## FIG. 13B

FIG. 13C

# FIG. 14

40

| | |
|---|---|
| E2 | E1 |

241

| B1 | B2 | A2 | A1 |
|---|---|---|---|
| C1 | C2 | D2 | D1 |

240

| | |
|---|---|
| F2 | F1 |

245

R DIRECTION

T DIRECTION

EP 1 496 505 A2

# FIG. 15

# FIG. 16A

FIG. 16B

FIG. 17

FIG. 18

FIG. 19

# FIG. 20A

# FIG. 20B

# FIG. 21

30

250'(350')

# FIG. 22

L1 LAYER

L0 LAYER

FOCUS OFFSET

NORMALIGED RADIUS

# FIG. 23